# EUROPÄISCHE PATENTSCHRIFT

(11) **EP 3 423 233 B1**
(45) Veröffentlichungstag und Bekanntmachung des Hinweises auf die Patenterteilung: **09.11.2022**
(21) Anmeldenummer: 17708677.4
(22) Anmeldetag: 02.03.2017
(51) Int. Cl.: B24B 39/04, B24B 39/02, B23P 9/02, C21D 7/08

(54) **GLÄTTWERKZEUG**
SMOOTHING TOOL
OUTIL DE BRUNISSAGE

(30) Priorität: 04.03.2016 DE 102016002923
(43) Veröffentlichungstag der Anmeldung: 09.01.2019
(73) Patentinhaber: Baublies AG, 71272 Renningen (DE)
(72) Erfinder: KAPPEL, Thomas, 71263 Weil der Stadt (DE)
(74) Vertreter: Bartels, Martin Erich Arthur
(86) Internationale Anmeldenummer: PCT/EP2017/000284
(87) Internationale Veröffentlichungsnummer: WO 2017/148588

(56) Entgegenhaltungen:
- WO-A1-2007/118467
- DE-A1- 4 317 091
- DE-A1-102004 007 476
- DE-U1- 8 634 178
- US-A- 2 923 181
- US-A- 4 118 846
- US-A- 4 246 684
- US-A1- 2006 144 198

## Beschreibung

Die Erfindung betrifft ein Glättwerkzeug mit den Merkmalen des Oberbegriffs von Patentanspruch 1.

Glättwerkzeuge, die Glättelemente aufweisen, die aus sehr hartem Material bestehen, werden üblicherweise dazu benutzt, um metallische Werkstückoberflächen durch spanloses Einwirken zu glätten und zu verfestigen, um dadurch eine sehr hohe Oberflächengüte in Verbindung mit erhöhten Festigkeitskennwerten an den bearbeiteten Werkstücken zu erreichen. Zu diesem Zweck wird mittels des Glättwerkzeuges das Glättelement in annähernd senkrechter Richtung auf die zu glättende Oberfläche gepresst, um die für die Umformung und Verfestigung erforderliche Flächenpressung zu erreichen, so dass bei gleichzeitig erfolgender Bewegung des Glättelements relativ zur Werkstückkontur dessen Oberfläche geglättet wird. Wie es in der einen nachveröffentlichten Stand der Technik zeigenden deutschen Patentanmeldung DE 10 2014 013 258.7 offenbart ist, sind die hierbei benutzten Glättelemente sphärisch ausgebildet, um der betreffenden (CNC-) Bearbeitungsmaschine unabhängig vom Eingriffswinkel des Glättelements ein äquidistantes Abarbeiten einer vorgegebenen Kontur zu ermöglichen.

Sollen jedoch bei dieser Art der Bearbeitung sehr filigrane, geometrisch exakte Konturen, wie Kegelabschnitte (Anfasungen), bearbeitet werden, ergeben sich durch die sphärische Bauform und die Arbeitsbewegung oft nicht akzeptable Konturverzerrungen durch eine starke Verrundung des Anfangs- und Endbereichs der Kontur. Dies erklärt sich durch den bereichsweise geringeren Umformwiderstand und der in diesen Bereichen erhöhten Flächenpressung des Glättelements (wie erhöhte Pressung von Kugel auf Kante gegenüber Pressung Kugel auf Fläche). Verstärkt wird dieser Effekt dadurch, dass der Wirkdurchmesser des Glättelements nicht beliebig verkleinert werden kann, da dann der gewünschte Glätteffekt verloren geht oder die Arbeitsgeschwindigkeit des Glättelements unwirtschaftlich niedrig wird. Die Begrenzung des Wirkdurchmessers des Glättelements behindert z.B. auch die Bearbeitung von Einstichgeometrien, wie sie z.B. bei Dichtelementen (O-Ringe) auf Wellen oder in Bohrungen eingesetzt werden. Durch den erforderlichen Wirkradius können diese Einstiche nicht bis in "die Ecke" geglättet werden.

US 2006/0144198 A1 offenbart ein gattungsgemäßes Glättwerkzeug mit einem für eine Bearbeitung an einem Werkstück vorgesehenen Glättelement und mit einer Halteplatte für das Glättelement, wobei die Kontur an der Stirnfläche des Glättelements, gesehen auf die Glätt-Bearbeitungslinie am Werkstück, mit dessen zu glättender Kontur gleich und in Richtung quer zur Glätt-Bearbeitungslinie zumindest teilweise konvex ausgebildet ist.

Weitere Werkzeuge und Glättwerkzeuge sind aus US 4 118 846 A, US 2 923 181 A, US 4 246 684 A, WO 2007/118467 A1, DE 10 2004 007 476 A1, DE 86 34 178 U1 und DE 43 17 091 A1 bekannt.

Im Hinblick auf diese Problematik liegt der Erfindung die Aufgabe zugrunde, ein Glättwerkzeug zur Verfügung zu stellen, mit dem auch schwierig zu bearbeitende Oberflächenbereiche einwandfrei und kostengünstig geglättet werden können.

Erfindungsgemäß ist diese Aufgabe durch ein Glättwerkzeug gelöst, das die Merkmale des Patentanspruchs 1 in seiner Gesamtheit aufweist.

Gemäß dem kennzeichnenden Teil des Patentanspruchs 1 zeichnet sich ein erfindungsgemäßes Glättwerkzeug dadurch aus, dass das Glättelement in einer Nut in einem Aufnahmeteil aufgenommen ist, das als Insert in der Halteplatte aufgenommen ist. Erfindungsgemäß ist das Glättelement in einer Nut eines Aufnahmeteils aufgenommen, das, als Insert in einer Halteplatte aufgenommen.

Das Glättelement weist an seiner wirksamen Stirnfläche, gesehen auf die Glätt-Bearbeitungslinie am Werkstück, eine Kontur auf, die zu der zu glättenden Kontur des Werkstücks gleich und in Richtung quer zur Glätt-Bearbeitungslinie zumindest teilweise konvex ausgebildet ist. Bei dieser Konfiguration steht zum einen ein zur zu glättenden Werkstückoberfläche paralleler Wirkbereich zur Verfügung, während gleichzeitig durch die weitere, hierzu quer verlaufende ballige Kontur ein äquidistantes Arbeiten ohne vorgeschriebenen Eingriffswinkel des Glättelements ermöglicht ist. Dadurch lassen sich geometrisch exakt Konturen, wie Anfasungen, sowie unterschiedlich geformte Einstichgeometrien bearbeiten, wobei Einstiche bis in die Eckbereiche hinein einwandfrei geglättet werden können.

Vorteilhafte Ausgestaltungen der Erfindung sind Gegenstand der Unteransprüche.

Bei der Erfindung kann das Glättelement, gesehen entlang der Glätt-Bearbeitungslinie, konvex, keilartig, geradlinig oder schräg verlaufend ausgebildet sein, je nach der Kontur der zu glättenden Oberfläche des betreffenden Werkstücks.

Mit Vorteil kann die Anordnung hierbei so getroffen sein, dass das Glättelement, insbesondere zur Bildung eines Keilverlaufs, aus zwei Einzelsegmenten gebildet ist.

Bei der Bearbeitung von Oberflächen an rotierenden Werkstücken steht die Zustellrichtung des Glättelements vorzugsweise senkrecht auf der Drehachse des zu bearbeitenden und hierfür drehbar antreibbaren Werkstücks.

Dabei kann die Anordnung mit Vorteil so getroffen sein, dass die Halteplatte über eine Schraubverbindung direkt schwenkbar mit dem Werkzeughalter verbunden ist oder zwischen zwei Klemmbacken des Werkzeughalters in einem Klemmspalt, vorzugsweise schwenkbar, aufgenommen ist.

Für eine besonders sichere, schwenkbare Anordnung am Werkzeughalter kann die Halteplatte bogenförmige Führungsleisten aufweisen, die in korrespondierende Aufnahmenuten in den Klemmbacken des Werkzeughalters eingreifen. Dadurch ist bei sämtlichen Schwenkpositionen ein formschlüssiger Führungseingriff zwischen Halteplatte und Werkzeughalter gebildet.

Ferner kann das Aufnahmeteil mit Vorteil zwischen zwei Plattenteilen der Halteplatte einspannbar sein.

In vorteilhafter Weise kann das Glättelement aus zumindest einem leistenförmigen Glättkörper bestehen, der quer zur Längsachse des leistenförmigen Glättelements und nach außen konvex vorstehend ballig ausgebildet ist.

In besonders vorteilhafter Weise ist für das erfindungsgemäße Glättwerkzeug ein Glättelement vorgesehen, das aus einem Diamanten, einem Diamant-Ersatzwerkstoff, einem beschichteten Keramikwerkstoff oder aus einem beschichteten Hartmetall besteht.

Nachstehend ist die Erfindung anhand von in der Zeichnung dargestellten Ausführungsbeispielen im Einzelnen erläutert.

Es zeigen:
- Fig.1: in teils abgebrochen und verkürzt dargestellter Draufsicht mehrere Ausführungsbeispiele des erfindungsgemäßen Glättwerkzeugs;
- Fig. 2 bis 5: gegenüber Fig. 1 vergrößert gezeichnete Ausschnitte der in Fig. 1 mit II bis V bezeichneten Teilbereiche;
- Fig. 6: eine verkürzt gezeichnete perspektivische Schrägansicht eines weiteren Ausführungsbeispiels;
- Fig. 7 und 8: eine Vorderansicht bzw. Seitenansicht des vorderen Endbereichs des Ausführungsbeispiels von Fig. 6;
- Fig. 9: eine verkürzt gezeichnete Draufsicht eines weiteren Ausführungsbeispiels sowie eines im Längsschnitt dargestellten, zu bearbeitenden Werkstücks;
- Fig. 10: eine vergrößert gezeichnete Teildarstellung des in Fig. 9 mit X bezeichneten Bereichs;
- Fig. 11: eine verkürzt gezeichnete perspektivische Schrägansicht eines weiteren Ausführungsbeispiels;
- Fig. 12 und 13: eine Seitenansicht bzw. Vorderansicht des oberen Endbereichs des Ausführungsbeispiels von Fig. 11;
- Fig. 14 und 15: perspektivische Schrägansichten gesondert dargestellter Halteplatten mit darin aufgenommenem Aufnahmeteil mit einem Glättelement gemäß weiteren Ausführungsbeispielen;
- Fig. 16: eine perspektivische Schrägansicht einer Halteplatte mit einem darin in einem Klemmspalt aufgenommenen Glättelement gemäß einem weiteren Ausführungsbeispiel der Erfindung;
- Fig. 17: eine Seitenansicht auf die Halteplatte von Fig. 16;
- Fig. 18: eine verkürzt gezeichnete perspektivische Schrägansicht eines weiteren Ausführungsbeispiels;
- Fig. 19: eine gegenüber Fig. 18 in geringfügig kleinerem Maßstab gezeichnete Seitenansicht lediglich des oberen Endbereichs des Ausführungsbeispiels von Fig. 18;
- Fig. 20: eine teilweise entsprechend einer in Fig. 19 mit XX - XX bezeichneten Schnittlinie aufgeschnittene Darstellung des vorderen Endbereichs des Ausführungsbeispiels von Fig. 18; und
- Fig. 21: eine perspektivische Schrägansicht des gesondert dargestellten, gegenüber Fig. 18 vergrößert gezeichneten Aufnahmeteils.

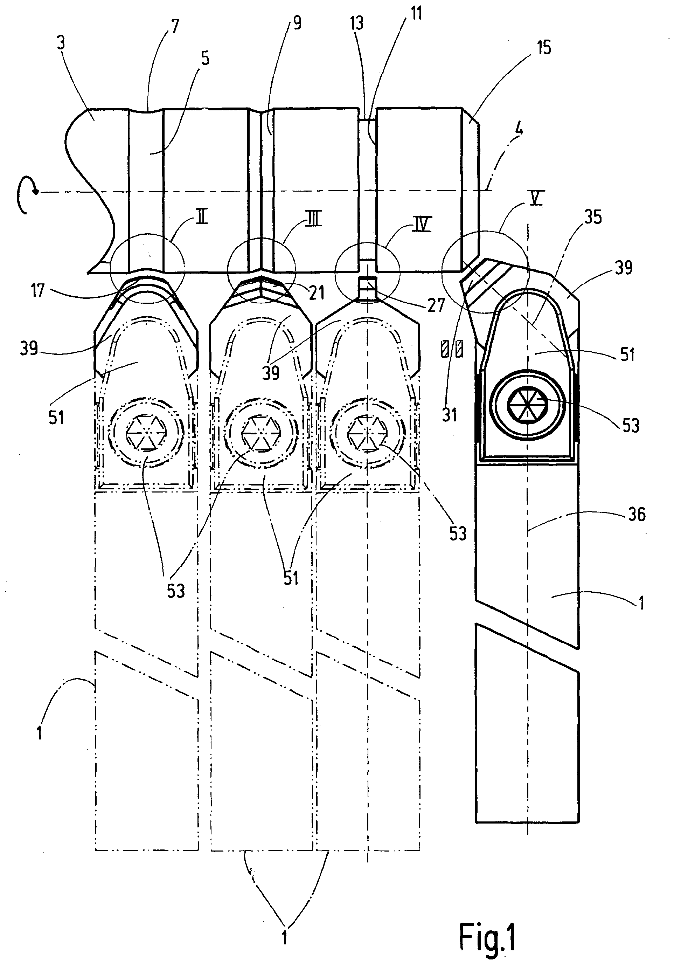

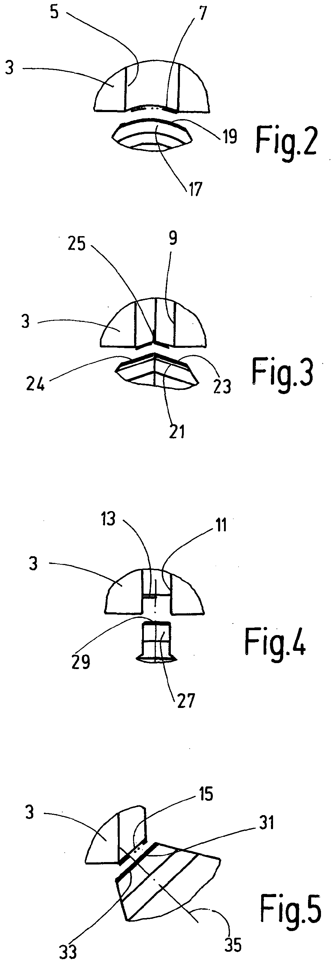

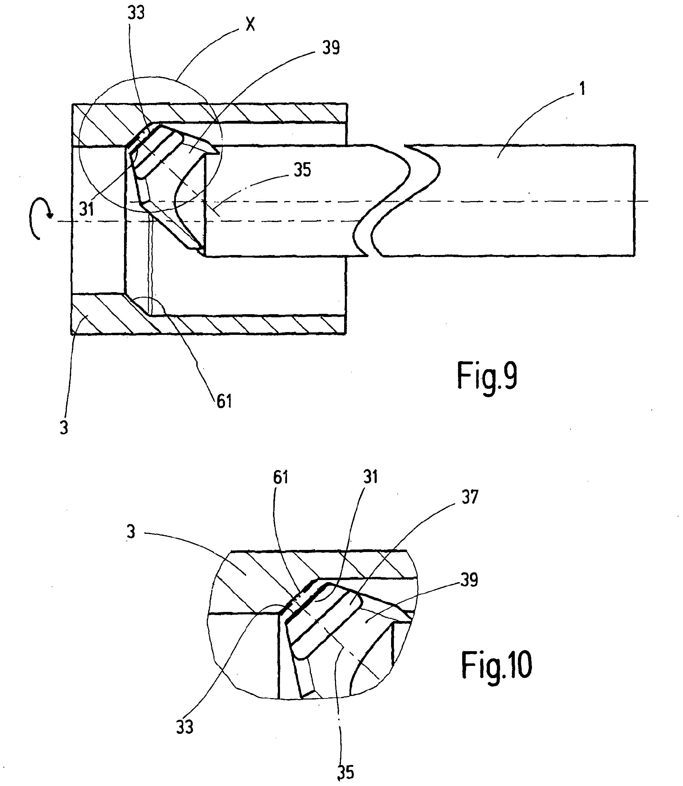

Bei den in den Figuren dargestellten Ausführungsbeispielen des erfindungsgemäßen Glättwerkzeugs weist dieses jeweils einen mit 1 bezeichneten Werkzeughalter auf, der mit einer nicht gezeigten Bearbeitungsmaschine verbindbar ist. Der Werkzeughalter 1 ist durch einen biegesteifen Träger, der auf zumindest dem Hauptteil seiner Länge einen rechteckförmigen, beispielsweise quadratischen, Querschnitt besitzt, oder durch einen biegesteifen Rundstab (Fig. 9) gebildet. Die Fig. 1 bis 5 zeigen vier Ausführungsbeispiele, bei denen das erfindungsgemäße Glättwerkzeug für die Bearbeitung von Flächen an einem um eine Drehachse 4 rotierenden Werkstück 3 vorgesehen ist. Bei diesen Flächen handelt es sich, in Fig. 1 von links nach rechts aufeinanderfolgend, um eine am Werkstück 3 umfängliche Ringnut 5 mit kreisbogenförmigem Nutgrund 7, einen Einstich in Form einer V-förmigen Ringnut 9, einen Einstich 11 in Form einer Ringnut mit ebenem Boden 13 sowie um eine am freien Ende des Werkstücks 3 befindliche Anfasung 15 mit einem Keilwinkel von 45°. Die Fig. 2 bis 5 zeigen den vorderen Endbereich des jeweiligen Glättelements 17, 21, 27, 31 für die Bearbeitung der in Fig. 1 gezeigten Flächenbereiche des Werkstücks 3.

So zeigt Fig. 2 für die Bearbeitung des kreisbogenförmigen Nutgrundes 7 der Ringnut 5 ein Glättelement 17, das an seiner wirksamen Stirnfläche 19 eine der kreisbogenförmigen Bearbeitungslinie am Nutgrund 7 entsprechende kreisbogenförmige Kontur besitzt. In hierzu senkrechter Richtung, d.h. bezogen auf Fig. 2, senkrecht in die und aus der Zeichnungsebene, ist die Stirnfläche 19 ballig.

Die Fig. 3 zeigt in Entsprechung zu Fig. 2 die Verhältnisse beim Bearbeiten der V-förmigen Ringnut 9. Hierbei hat am Glättelement 21 die wirksame Stirnfläche eine Keilform mit zwei im Winkel zueinander verlaufenden Segmenten 23 und 24, die jeweils, entsprechend der Kontur des Nutgrundes 25 der Ringnut 9, geradlinig entsprechend der geraden Abschnitte der Kontaktzone verlaufen. Wiederum ist das Glättelement 21 in hierzu senkrechter Richtung ballig.

Fig. 4 zeigt das für den Einstich 11 mit geradem Boden 13 benutzte Glättelement 27 mit parallel zur Kontaktzone am Boden 13 gerade verlaufender Stirnfläche 29, wobei wiederum die hierzu senkrechte Kontur des Glättelements 27 ballig ist.

Schließlich zeigt die Fig. 5 das Glättelement 31 für die Bearbeitung der Anfasung 15 am Werkstück 3. Entsprechend der Kegelfläche der Anfasung 15 hat die wirksame Stirnfläche 33 entlang der Kontaktlinie einen geraden Verlauf, ist jedoch in dazu senkrechter und entlang der Zustellachse 35 verlaufender Richtung wiederum ballig. Wie die Fig. 1 zeigt, befindet sich das Glättelement 31 relativ zur Längsachse 36 des Werkzeughalters 1 in einer Winkelanordnung.

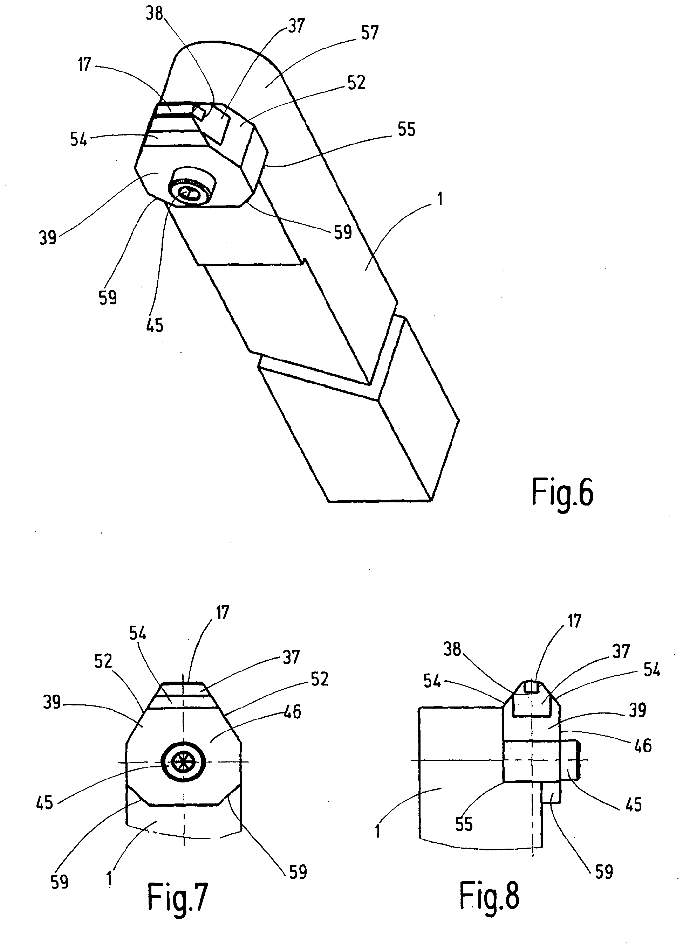

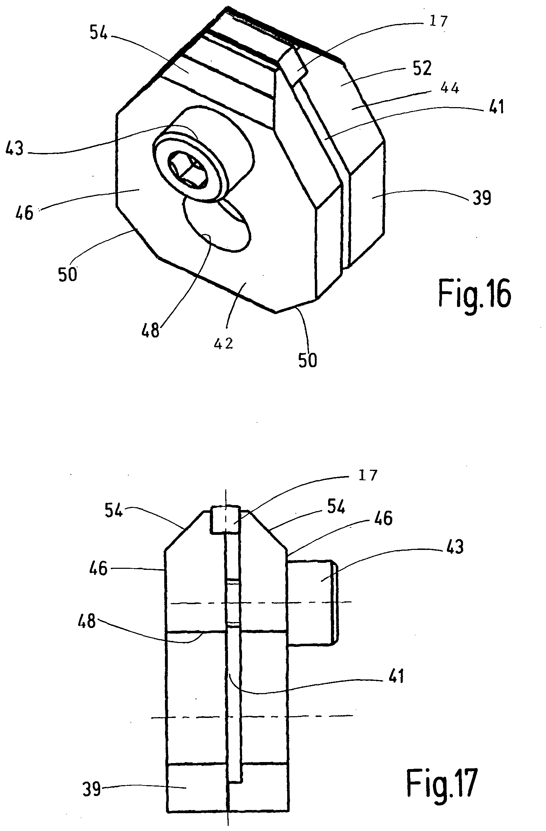

Die Fig. 6 und folgende zeigen, bis auf die Ausführungsform nach den Fig. 16 und 17, verschiedene Ausführungsbeispiele der Verbindung der Glättelemente 17, 21, 27 und 31, die jeweils in einem Aufnahmeteil 37 sitzen, mit einem zugehörigen Werkzeughalter 1. Diese sind, mit Ausnahme der Fig. 9, die einen Werkzeugträger 1 in Form eines Rundstabes zeigt, jeweils durch einen rechteckförmigen Träger gebildet. Das stabförmige Glättelement 17, 21, 27, 31 selbst aus einem Diamantwerkstoff mit feinpolierter wirksamer Stirnfläche ist in einer Nut 38 in einem Aufnahmeteil 37 fest eingebaut. Dieses Aufnahmeteil 37 wiederum ist als Insert in einer Halteplatte 39 aufgenommen, in der das Aufnahmeteil 37 durch Löten oder Schweißen fest angebracht sein oder auswechselbar angebracht sein kann, wobei im letzteren Fall in der Halteplatte 39 ein Klemmspalt 41 vorgesehen sein kann, in dem das Aufnahmeteil 37 oder das Glättelement 17 selbst (s. Fig. 16 und 17) und durch eine Spannschraube 43 festspannbar ist. Die Halteplatte 39 kann, wie Fig. 6 bis 8 zeigen, über eine Schraubverbindung 45 mit dem Werkzeughalter 1 zumindest teilweise direkt schwenkbar verbunden sein oder kann, wie dies bei den Beispielen von Fig. 1, 11 bis 13 sowie 18 bis 21 der Fall ist, im Klemmspalt 47 zwischen zwei Klemmbacken 49 und 51 des Werkzeughalters 1, vorzugsweise schwenkbar, mittels einer Klemmschraube 53, gehalten sein.

Bei der direkten Verschraubung der Halteplatte 39 mit dem Werkzeugträger 1, wie es in Fig. 6 bis 8 gezeigt ist, sind für eine formschlüssige Sicherung gegen eine ungewollte Schwenkbewegung der Halteplatte 39 um die Achse der Schraubverbindung 45 in einer Vertiefung 55 im Endteil 57 des Werkzeughalters 1 Anschlagflächen 59 für die Halteplatte 39 gebildet.

Die Fig. 9 und 10 zeigen ein Ausführungsbeispiel, bei dem in einem Werkstück 3 in Form eines hohlen Kreiszylinders eine innenliegende Anfasung 61 zu bearbeiten ist. Entsprechend der jeweiligen Kontur der Konusfläche der Anfasung 61 kommt das Glättelement 31 zum Einsatz, wie es in Fig. 5 dargestellt ist, das an der wirksamen Stirnfläche 33 eine eine gerade Kontaktfläche bildende Kontur besitzt. Da bei der Innenbearbeitung von Fig. 9 und 10 nur ein begrenzter Arbeitsraum im Inneren Hohlraum des Werkstücks 3 zur Verfügung steht, ist der Werkzeughalter 1 als Rundstab ausgebildet, an dem die Halteplatte 39 in nicht lösbarer Verbindung unmittelbar angebracht, beispielsweise angeschweißt, ist.

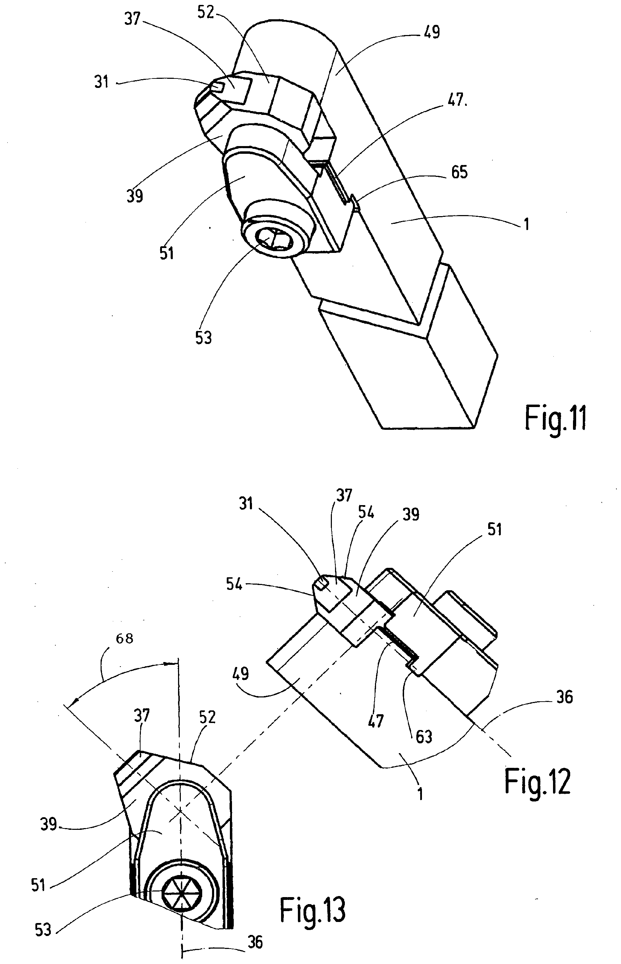

Die Verbindung zwischen der Halteplatte 39 mit dem Aufnahmeteil 37 und dem jeweiligen Glättelement 17, 21, 27, 31 kann winkeleinstellbar gestaltet sein, s. Fig. 1 und 11 bis 13. Bei diesen Beispielen ist die äußere Klemmbacke 51 mit einer gegen die andere Klemmbacke 49 vorspringenden Nase 63 in einer Nut 65 am Werkzeughalter 1 gegen Verdrehen festgelegt, s. Fig. 11 und 12. Die zwischen den Haltebacken 49 und 51 gespannte Halteplatte 39 ist jedoch in eine gewünschte Winkelposition bewegbar, um einen gewünschten Neigungswinkel 67 (s. Fig. 13) gegenüber der Längsachse 36 des Werkzeughalters 1 einzustellen.

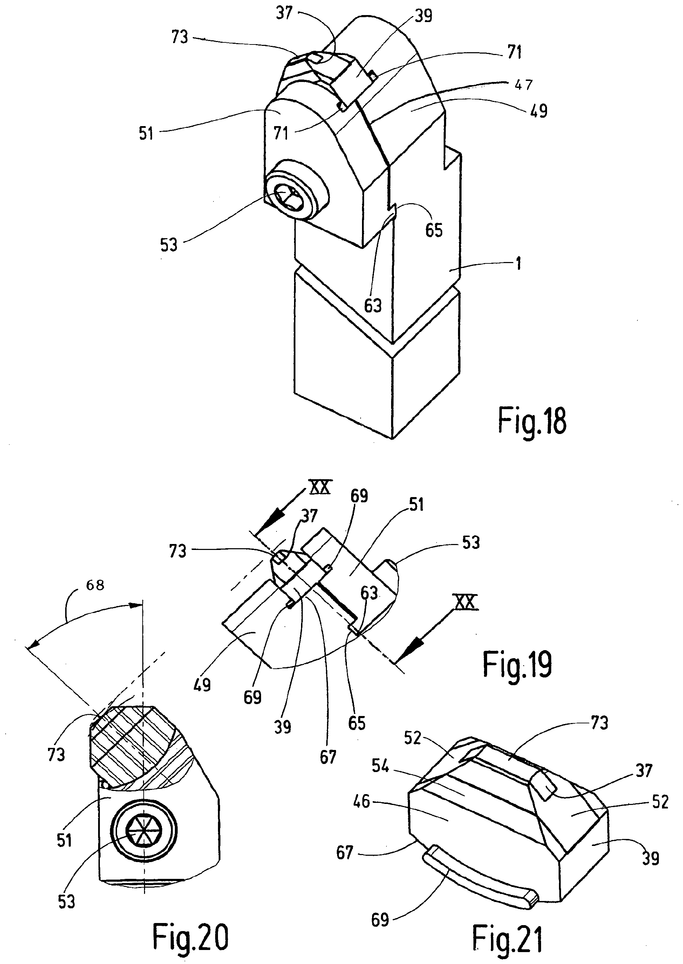

Die Fig. 18 bis 21 zeigen für eine solche Einstellung des Neigungswinkels 68 (s. Fig. 20) eine Anordnung, bei der die Halteplatte 39 am Werkzeughalter 1 pendelnd gelagert ist. Hierfür weist die Halteplatte 39, wie am deutlichsten aus Fig. 21 zu ersehen ist, eine kreisbogenförmig gewölbte Unterseite 67 auf, an deren unteren seitlichen Längsrändern sich vorstehende, bogenförmige Führungsleisten 69 befinden, die, wie der gewölbte Boden 67, entlang des Radius für eine Schwenkbewegung der Halteplatte 39 verlaufen. Für diese Bewegung ist die Halteplatte 39 mit ihren Führungsleisten 69 in zugeordneten Führungsnuten 71 in den Klemmbacken 49 und 51 geführt. Bei dieser Pendellagerung kann die Einstellung des Neigungswinkels 68 beim Zustellen des Glättelements 17 bei nicht festgezogener Spannschraube 53 selbsttätig erfolgen. Wie ebenfalls der Fig. 21 entnehmbar ist, kann das Glättelement aus einem leistenförmigen Glättkörper 73 bestehen, dessen Kontur entlang der Längsachse der Kontur der Bearbeitungslinie am Werkstück entspricht, der jedoch quer zu seiner Längsachse, nach außen hin abfallend, konvex vorstehend ballig ausgebildet ist.

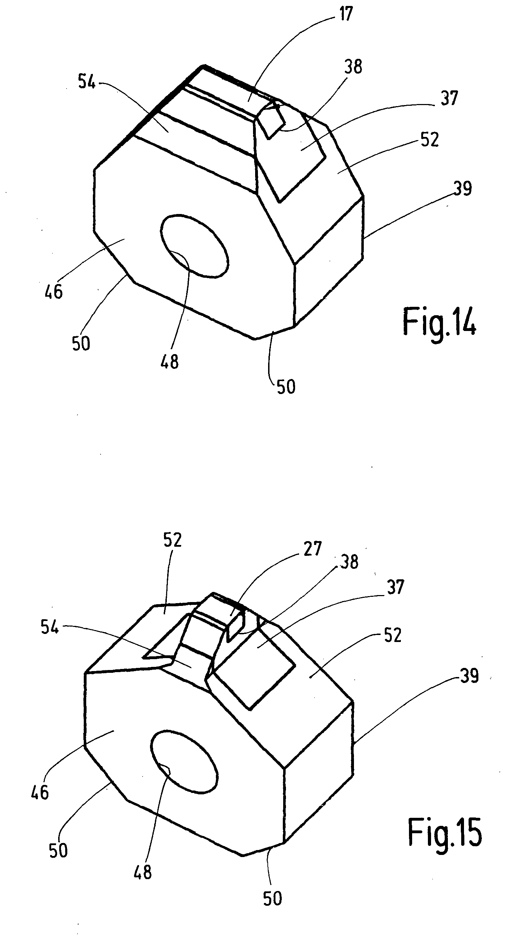

Da das Glättelement 17 im Betrieb verschleißt, kann es, wie in Fig. 16 und 17 gezeigt, unmittelbar auswechselbar in der Halteplatte 39 im Klemmspalt 41 zwischen den beiden Plattenteilen 42, 44 angeordnet sein. Bei unlösbar in die Halteplatte 39 eingebautem Aufnahmeteil 37 können jeweilige Halteplatten 39, mit fest eingebauten, für unterschiedliche Bearbeitungsaufgaben vorgesehenen Glättelementen, wie den Glättelementen 17 und 27, die in Fig. 14 bzw. 15 gezeigt sind, als leicht auswechselbare Einzelteile eines Gesamtwerkzeug-Systems vorgesehen sein. Die Fig. 14 und 15 zeigen Beispiele auswechselbarer Halteplatten 39, wie sie für eine Anbringung mittels einer Halteschraube 45 für die Ausführungsbeispiele von Fig. 6 bis 8 vorgesehen sind. Die Halteplatten 39 in Form eines Klotzes weisen zueinander parallel verlaufende Seitenwandflächen 46 auf, in deren Zentralbereich eine durchgehende Bohrung 48 für die Befestigungsschraube 45 vorgesehen ist. Schrägflächen 50 am unteren Randbereich der Seitenwandflächen 46 bilden Passflächen für die Anlage an den zur Lagefixierung am Werkzeugträger 1 im Bedarfsfall vorgesehenen Anschlagflächen 59. An der Oberseite befindliche weitere Schrägflächen 52 und 54, die von der Oberseite der Halteplatte 39, zueinander konvergierend nach oben verlaufen, bilden die seitlichen Einfassungen für das oben vorstehende Aufnahmeteil 37. Das in Fig. 16 und 17 gezeigte Beispiel, der geschlitzten, einen inneren Klemmspalt 41 aufweisenden Halteplatte 39 ist in gleicher Weise, wie in Fig. 14 und 15 gezeigt, mit oberen Schrägflächen 52, 54 sowie unteren Schrägflächen 50 versehen. Entsprechendes gilt für die Halteplatte 39 des Ausführungsbeispiels von Fig. 18 bis 21, wobei, wie in Fig. 21 bezeichnet, ebenfalls oberhalb der Seitenwandflächen 46 nach oben hin konvergierende Schrägflächen 52 und 54 vorhanden sind.

## Patentansprüche

1. Glättwerkzeug mit einem für eine Bearbeitung an einem Werkstück (3) vorgesehenen Glättelement (17, 21, 27, 31) und mit einer Halteplatte (39) für das Glättelement (17, 21, 27, 31), wobei die Kontur an der wirksamen Stirnfläche (19, 29, 33) des Glättelements (17, 21, 27, 31), gesehen auf die Glätt-Bearbeitungslinie (7, 9, 13, 15, 61) am Werkstück (3), mit dessen zu glättender Kontur gleich und in Richtung quer zur Glätt-Bearbeitungslinie (7, 9, 13, 15, 61) zumindest teilweise konvex ausgebildet ist, **dadurch gekennzeichnet, dass** das Glättelement (17, 21,27, 31) in einer Nut (38) in einem Aufnahmeteil (37) aufgenommen ist, das als Insert in der Halteplatte (39) aufgenommen ist.

2. Glättwerkzeug nach Anspruch 1, **dadurch gekennzeichnet, dass** das Glättelement (17, 21, 23, 31) entlang der Glätt-Bearbeitungslinie (7, 9, 25, 13, 15) konvex, keilartig, geradlinig oder schräg verlaufend ausgebildet ist.

3. Glättwerkzeug nach Anspruch 1 oder 2, **dadurch gekennzeichnet, dass** das Glättelement (21) insbesondere zur Bildung eines Keilverlaufs aus zwei Einzelsegmenten (23, 24) gebildet ist.

4. Glättwerkzeug nach einem der vorstehenden Ansprüche, **dadurch gekennzeichnet, dass** die Zustellrichtung des Glättelements (17, 21, 27, 31) vorzugsweise senkrecht auf der Drehachse (4) des zu bearbeitenden und hierfür drehbar antreibbaren Werkstücks (3) steht.

5. Glättwerkzeug nach einem der vorstehenden Ansprüche, **dadurch gekennzeichnet, dass** das Aufnahmeteil (37) durch Löten oder Schweißen fest in der Halteplatte (39) aufgenommen ist.

6. Glättwerkzeug nach einem der vorstehenden Ansprüche, **dadurch gekennzeichnet, dass** das Glättelement mit Aufnahmeteil (37) in einem Klemmspalt (41) zwischen zwei Plattenteilen der Halteplatte (39) einspannbar und auswechselbar aufgenommen ist.

7. Glättwerkzeug nach einem der vorstehenden Ansprüche, **dadurch gekennzeichnet, dass** die Halteplatte (39) zwei Arten von Schrägflächen (52, 54) aufweist, die paarweise zueinander konvergierend verlaufend seitliche Einfassungen für das Aufnahmeteil (37) oder das Glättelement (17) bilden.

8. Glättwerkzeug nach einem der vorstehenden Ansprüche, **dadurch gekennzeichnet, dass** die Halteplatte (39) über eine Schraubverbindung (53) direkt schwenkbar mit einem Werkzeughalter (1) verbunden ist oder in einem weiteren Klemmspalt (47) zwischen zwei Klemmbacken (49, 51) des Werkzeughalters (1) vorzugsweise schwenkbar aufgenommen ist.

9. Glättwerkzeug nach einem der vorstehenden Ansprüche, **dadurch gekennzeichnet, dass** die Halteplatte (39) bogenförmige Führungsleisten (69) aufweist, die in korrespondierende Aufnahmenuten (71) in den Klemmbacken (49, 51) des Werkzeughalters (1) eingreifen.

10. Glättwerkzeug nach einem der vorstehenden Ansprüche, **dadurch gekennzeichnet, dass** das Glättelement (17, 21, 27, 31) aus einem leistenförmigen Glättkörper (73) besteht, der quer zur Längsachse des leistenförmigen Glättelements (17, 21, 27, 31) und nach außen konvex vorstehend ballig ausgebildet ist.

11. Glättwerkzeug nach einem der vorstehenden Ansprüche, **dadurch gekennzeichnet, dass** das Glättelement (17, 21, 27, 31) quer zu seiner Längsachse um ein Mehrfaches kürzer ausgebildet ist als in seiner Längsachse gesehen.

12. Glättwerkzeug nach einem der vorstehenden Ansprüche, **dadurch gekennzeichnet, dass** der Werkzeughalter (1) immer nur ein Glättelement (17, 21, 27, 31) trägt.

13. Glättwerkzeug nach einem der vorstehenden Ansprüche, **dadurch gekennzeichnet, dass** die Halteplatte (39) mit Aufnahmeteil (37) einstückige Bestandteile des leistenförmigen Werkzeughalters (1) oder mit diesem Werkzeughalter (1) fest verbunden sind, und dass das am Aufnahmeteil (37) festgelegte Glättelement (31) derart relativ zur Längsachse (36) des Werkzeughalters (1) in einer Winkelanordnung ist, dass zumindest Teile des Glättelements (31) sowohl in axialer als auch in radialer Richtung über die freie Stirnseite des Werkzeughalters (1) vorstehen.

14. Glättwerkzeug nach einem der vorstehenden Ansprüche, **dadurch gekennzeichnet, dass** bei einer schwenkbaren Anordnung der Halteplatte (39) am Werkzeughalter (1) in zumindest einer Schwenkstellung das Glättelement (17) mit einem axialen Abstand, entlang der Längsachse (36) des Werkzeughalters (1) gesehen, über diesen vorsteht.

15. Glättwerkzeug nach einem der vorstehenden Ansprüche, **dadurch gekennzeichnet, dass** das Glättelement (17, 21, 27, 31) aus einem
- Diamanten,
- Diamantenersatzwerkstoff,
- beschichteten Keramikwerkstoff, oder
- beschichteten Hartmetall
besteht.

## Claims

1. Burnishing tool with a burnishing element (17, 21, 27, 31) provided for machining on a workpiece (3) and with a retaining plate (39) for the burnishing element (17, 21, 27, 31), wherein the contour on the operative end face (19, 29, 33) of the burnishing element (17, 21, 27, 31), viewed towards the burnishing line (7, 9, 13, 15, 61) on the workpiece (3), is identical to its contour to be burnished and is at least partially convex in the direction transverse to the burnishing line (7, 9, 13, 15, 61), **characterised in that** the burnishing element (17, 21, 27, 31) is received in a groove (38) in a receiving part (37) which is received as an insert in the retaining plate (39).

2. Burnishing tool according to claim 1, **characterised in that** the burnishing element (17, 21, 23, 31) is configured to be convex, wedge-shaped, rectilinear or oblique along the burnishing line (7, 9, 25, 13, 15).

3. Burnishing tool according to claim 1 or 2, **characterised in that** the burnishing element (21) is formed from two individual segments (23, 24), in particular to form a wedge profile.

4. Burnishing tool according to one of the preceding claims, **characterised in that** the infeed direction of the burnishing element (17, 21, 27, 31) is preferably perpendicular to the axis of rotation (4) of the workpiece (3) to be machined which is rotatably driveable for this purpose.

5. Burnishing tool according to one of the preceding claims, **characterised in that** the receiving part (37) is fixedly received in the retaining plate (39) by soldering or welding.

6. Burnishing tool according to one of the preceding claims, **characterised in that** the burnishing element with receiving part (37) is received in a clamping gap (41) between two plate parts of the retaining plate (39) in a clampable and replaceable manner.

7. Burnishing tool according to one of the preceding claims, **characterised in that** the retaining plate (39) comprises two types of oblique surfaces (52, 54), converging in pairs with respect to each other, which form lateral enclosures for the receiving part (37) or the burnishing element (17).

8. Burnishing tool according to one of the preceding claims, **characterised in that** the retaining plate (39) is directly and pivotably connected to a tool holder (1) via a screw connection (53) or is received, preferably pivotably, in a further clamping gap (47) between two clamping jaws (49, 51) of the tool holder (1).

9. Burnishing tool according to one of the preceding claims, **characterised in that** the retaining plate (39) has curved guide strips (69) which engage in corresponding receiving grooves (71) in the clamping jaws (49, 51) of the tool holder (1).

10. Burnishing tool according to one of the preceding claims, **characterised in that** the burnishing element (17, 21, 27, 31) consists of a strip-shaped burnishing body (73) which is convex transverse to the longitudinal axis of the strip-shaped burnishing element (17, 21, 27, 31) and protrudes convexly outwards.

11. Burnishing tool according to one of the preceding claims, **characterised in that** the burnishing element (17, 21, 27, 31) is configured to be several times shorter transverse to its longitudinal axis than when viewed in its longitudinal axis.

12. Burnishing tool according to one of the preceding claims, **characterised in that** the tool holder (1) always bears only one burnishing element (17, 21, 27, 31).

13. Burnishing tool according to one of the preceding claims, **characterised in that** the retaining plate (39) with receiving part (37) are integral components of the strip-shaped tool holder (1) or are fixedly connected to this tool holder (1), and **in that** the burnishing element (31) fixed to the receiving part (37) is in an angular arrangement with respect to the longitudinal axis (36) of the tool holder (1) in such a manner that at least parts of the burnishing element (31) protrude in both the axial and radial direction beyond the free end face of the tool holder (1).

14. Burnishing tool according to one of the preceding claims, **characterised in that**, with a pivotable arrangement of the retaining plate (39) on the tool holder (1), the burnishing element (17) in at least one pivot position protrudes beyond the tool holder (1) with an axial gap, when viewed along the longitudinal axis (36) of said tool holder.

15. Burnishing tool according to one of the preceding claims, **characterised in that** the burnishing element (17, 21, 27, 31) consists of a
- diamond,
- diamond-substitute material,
- coated ceramic material, or
- coated carbide.

## Revendications

1. Outil de polissage comprenant un élément (17, 21, 27, 31) de polissage prévu pour un traitement d'une pièce (3) et comprenant une plaque (39) de retenue de l'élément (17, 21, 27, 31) de polissage, dans lequel le contour de la surface (19, 29, 33) frontale efficace de l'élément (17, 21, 27, 31) de polissage, considéré sur la ligne (7, 9, 13, 15, 61) de traitement de polissage sur la pièce (3), est le même que celui du contour à polir et est convexe au moins en partie dans la direction transversale à la ligne (7, 9, 13, 15, 61) de traitement de polissage, **caractérisé en ce que** l'élément (17, 21, 27, 31) de polissage est logé dans une rainure (38) d'une partie (37) de réception, qui est logée comme insert dans la plaque (39) de retenue.

2. Outil de polissage suivant la revendication 1, **caractérisé en ce que** l'élément (17, 21, 23, 31) de polissages est constitué de manière à s'étendre, de manière convexe, cunéiforme, rectiligne ou inclinée, le long de la ligne (7, 9, 25, 13, 15) de traitement de polissage.

3. Outil de polissage suivant la revendication 1 ou 2, **caractérisé en ce que** l'élément (21) de polissage est formé, notamment pour la formation d'une courbe en coin, de deux segments (23, 24) individuels.

4. Outil de polissage suivant l'une des revendications précédentes, **caractérisé en ce que** la direction d'avance de l'élément (17, 21, 27, 31) de polissage est, de préférence perpendiculaire à l'axe (4) de rotation de la pièce (3) en traitement et pouvant être entraînée en rotation à cet effet.

5. Outil de polissage suivant l'une des revendications précédentes, **caractérisé en ce que** la partie (37) de réception est logée fixement dans la plaque (39) de retenue par brasage ou par soudage.

6. Outil de polissage suivant l'une des revendications précédentes, **caractérisé en ce que** l'élément de polissage peut, par la partie (37) de réception, être bloqué et être logé de manière remplaçable dans une fente (41) de serrage entre deux parties de la plaque (39) de retenue.

7. Outil de polissage suivant l'une des revendications précédentes, **caractérisé en ce que** la plaque (39) de retenue a deux types de surfaces (52, 54) inclinées qui, en s'étendant de manière convergente l'une par rapport à l'autre par paire, forment des bordures latérales pour la partie (37) de réception ou l'élément (17) de polissage.

8. Outil de polissage suivant l'une des revendications précédentes, **caractérisé en ce que** la plaque (39) de retenue est reliée directement avec possibilité de pivoter à un porte-outil (1) par un vissage (53) ou est logée, de manière de préférence à pouvoir pivoter, dans un autre intervalle (47) de serrage entre deux mâchoires (49, 51) de serrage du porte-outil (1).

9. Outil de polissage suivant l'une des revendications précédentes, **caractérisé en ce que** la plaque (39) de retenue a des baguettes (69) arquées de guidage, qui pénètrent dans des rainures (71) correspondantes de réception des mâchoires (49, 51) de serrage du porte-outil (1).

10. Outil de polissage suivant l'une des revendications précédentes, **caractérisé en ce que** l'élément (17, 21, 27, 31) de polissage est constitué d'un corps (73) de polissage en forme de baguette, qui est transversal à l'axe longitudinal de l'élément (17, 21, 27, 31) de polissage en forme de baguette et qui est bombé en saillie convexe vers l'extérieur.

11. Outil de polissage suivant l'une des revendications précédentes, **caractérisé en ce que** l'élément (17, 21, 27, 31) de polissage est, transversalement à son axe longitudinal, plusieurs fois plus court que considéré dans son axe longitudinal.

12. Outil de polissage suivant l'une des revendications précédentes, **caractérisé en ce que** le porte-outil (1) ne porte toujours qu'un élément (17, 21, 27, 31) de polissage.

13. Outil de polissage suivant l'une des revendications précédentes, **caractérisé en ce que** la plaque (39) de retenue est reliée fixement par la partie (37) de réception à des parties constitutives d'une seule pièce du porte-outil (1) en forme de baguette ou à ce porte-outil (1), et **en ce que** l'élément (31) de polissage fixé à la partie (37) de réception est agencé en agencement angulaire par rapport à l'axe (36) longitudinal du porte-outil (1), de manière à ce qu'au moins des parties de l'élément (31) de polissage soient en saillie tant dans la direction axiale qu'également dans la direction radiale du côté frontal libre du porte-outil (1).

14. Outil de polissage suivant l'une des revendications précédentes, **caractérisé en ce que**, dans un agencement pivotant de la plaque (39) de retenue sur le porte-outil (1), dans au moins une position de pivotement, l'élément (17) de polissage dépasse d'un dépassement axial, considéré suivant l'axe (36) longitudinal du porte-outil (1), de celui-ci.

15. Outil de polissage suivant l'une des revendications précédentes, **caractérisé en ce que** l'élément (17, 21, 27, 31) de polissage est en
- diamant,
- matériau de remplacement du diamant,
- matériau céramique plaqué, ou
- métal dur plaqué.
